**Europäisches Patentamt**

(19) **European Patent Office**

**Office européen des brevets**

(11) Veröffentlichungsnummer: **0 092 139 B1**

(12) # EUROPÄISCHE PATENTSCHRIFT

(45) Veröffentlichungstag der Patentschrift:
**22.06.88**

(51) Int. Cl.⁴: **B 60 R 13/08**, F 02 B 77/13

(21) Anmeldenummer: **83103514.2**

(22) Anmeldetag: **12.04.83**

(54) **Nutzfahrzeug mit in einer schalldämmenden Kapsel angeordnetem Antriebsaggregat.**

(30) Priorität: **16.04.82 DE 3214089**

(43) Veröffentlichungstag der Anmeldung:
**26.10.83 Patentblatt 83/43**

(45) Bekanntmachung des Hinweises auf die Patenterteilung:
**22.06.88 Patentblatt 88/25**

(84) Benannte Vertragsstaaten:
**AT BE CH DE FR GB IT LI NL**

(56) Entgegenhaltungen:
**DE - A - 2 703 227**
**DE - A - 2 912 386**
**DE - A - 2 952 188**

**A.T.Z. AUTOMOBILTECHNISCHE ZEITSCHRIFT, Band 84, Nr. 6, Juni 1982, Schwäbisch-Gmünd, Deutschland "Internationale Transport-Fachmesse in München" Seiten 323-325**

(73) Patentinhaber: **M A N Nutzfahrzeuge GmbH, Dachauer Strasse 667 Postfach 50 06 20, D-8000 München 50 (DE)**

(72) Erfinder: **Stiglmaier, Manfred, ing. grad., Am Grübel 7a, D-8031 Gilching (DE)**
Erfinder: **Hörmann, Rudolf, D-8061 Pullhausen 42 Bei Dauchau (DE)**
Erfinder: **Drewitz, Hans, Ing. grad., Agnesstrasse 59, D-8000 München 40 (DE)**
Erfinder: **Harmeier, Reinhard, Grünfinkenstrasse 2a, D-8038 Gröbenzell (DE)**

## Beschreibung

Die Erfindung bezieht sich auf ein Nutzfahrzeug der im Gattungsbegriff des Patentanspruchs 1 angegebenen Art. Ein solches Nutzfahrzeug ist aus der DE-A-2 952 188 bekannt.

Herkömmliche Nutzfahrzeuge, bei denen das Antriebsaggregat in einer von Kühlluft durchströmten Schalldämmkapsel eingeschlossen ist, weisen stirnseitige Lufteintrittsöffnungen für die Schalldämmkapsel auf, wobei die Lufteintrittsöffnungen üblicherweise als Absorberstrecken ausgebildet sind, jedoch im wesentlichen in Fahrzeuglängsrichtung ausgerichtet sind. Der Lufteintritt erfolgt dabei üblicherweise durch einen Kühlergrill in einer Frontwand des Fahrerhauses. Es hat sich gezeigt, dass der in Fahrzeuglängsrichtung nach vorne durch die Kühllufteintrittsöffnungen austretende Schall nur mit aufwendigen und insbesondere viel Raum beanspruchenden Absorberstrecken im gewünschten Mass dämpfbar ist. Ausgehend von diesem Problem lehrt die Vorrichtung nach der obengenannten DE-OS 2 952 188 vor dem Kühllufteinlass in der Frontwand des Fahrerhauses einen Vorbauschacht anzubringen, der in Fahrzeuglängsrichtung nach vorne geschlossen ist und einen Luftzutritt nur vertikal von oben oder von unten ermöglicht. Hierdurch soll erreicht werden, dass mit vergleichsweise geringem Aufwand in der Ausbildung des Absorberschachts selbst die Schallabstrahlung vom Antriebsaggregat in Fahrtrichtung des Nutzfahrzeugs stark vermindert wird. Ein Nachteil dieser vorbekannten Konstruktion besteht darin, dass sie baulich aufwendig ist, indem ein eigener Vorbauschacht vor dem Fahrerhaus verwendet wird, dass sie darüber hinaus Platz in Fahrzeuglängsrichtung beansprucht, der unter Umständen nicht zur Verfügung steht und dass bisher vorhandene Serienfahrzeuge zur Verwirklichung der vorbekannten Konstruktion in erheblicher Weise baulich verändert werden müssen.

Aufgabe der vorliegenden Erfindung ist es, die Schallabstrahlung des Antriebsaggregats eines gattungsgemässen Nutzfahrzeugs nach vorne zu reduzieren, wobei nur geringste bauliche Veränderungen an vorhandenen Serienfahrzeugen zugelassen sein sollen.

Erfindungsgemäss wird die gestellte Aufgabe dadurch gelöst, dass ein gattungsgemässes Nutzfahrzeug die Merkmale des Kennzeichnungsteils des Patentanspruchs 1 aufweist.

Der Hauptvorteil eines erfindungsgemässen Nutzfahrzeugs besteht darin, dass die gestellte Aufgabe gelöst wird, indem ohnehin vorhandene Bauelemente des Fahrzeugs, nämlich eine Fahrerhausfrontwand und ein vorderer Stossbügel zur Bildung einer die Kühllufteintrittsöffnung nach vorne abschirmenden Wand herangezogen werden und nur relativ geringe bauliche Ergänzungen zur Vervollständigung der vorhandenen Bauelemente zu einer geschlossenen Abdeckung benötigt werden.

Vorteilhaft ist es, wenn der Bewegungsspalt zwischen der Unterkante der Fahrerhausfrontwand und dem Stossfänger durch eine elastische Abdeckleiste überbrückt ist, so dass dieser Bewegungsspalt durchaus grosszügig bemessen sein kann, wie es die Folge einer komfortablen Fahrerhauslagerung auf dem Fahrzeugrahmen ist und dennoch ein Schallaustritt durch den Spalt mit Sicherheit auszuschliessen ist.

Um für ein erfindungsgemässes Nutzfahrzeug herkömmliche Fahrerhäuser mit Kühlergrill verwenden zu können, wird in weiterer Ausbildung der Erfindung vorgeschlagen, dass ein in der Fahrerhausfrontwand vorhandener Kühlergrill mit einer aus schallisolierendem Material bestehenden Abdeckung verschlossen ist. Eine solche Abdeckung eines vorhandenen Kühlergrills ist baulich einfach durchzuführen, so dass auch hierdurch der Bauaufwand gegenüber herkömmlich gestalteten Nutzfahrzeugen sich nur unwesentlich erhöht.

Besonders vorteilhaft ist die Anwendung der Erfindung bei einem Nutzfahrzeug, welches ein Frontlenkerfahrerhaus aufweist und dessen Antriebsaggregat im Fahrzeugrahmen in Untersitzbauweise angeordnet ist. Bei solchen Fahrzeugen ohne Motorhaube wird im allgemeinen eine gute Schalldämmung des Antriebsaggregats durch das Fahrerhaus selbst erreicht, lediglich die Schallabstrahlung nach vorne und nach hinten ist unzulässig hoch, so dass gerade bei dieser Ausführungsform die Anwendung der erfindungsgemässen Konstruktion eine erhebliche Verbesserung der Gesamtgeräuschdämpfung erbringt.

Anhand der beigefügten Zeichnungen wird ein Ausführungsbeispiel der Erfindung erläutert. In den Zeichnungen zeigt

Fig. 1 den vorderen Bereich eines Frontlenkerlastkraftwagens in Seitenansicht schematisch,

Fig. 2 einen Längsschnitt durch die Anordnung nach Fig. 1 vergrössert und

Fig. 3 eine Stirnansicht des Nutzfahrzeugs aus Fig. 1, teilweise aufgeschnitten.

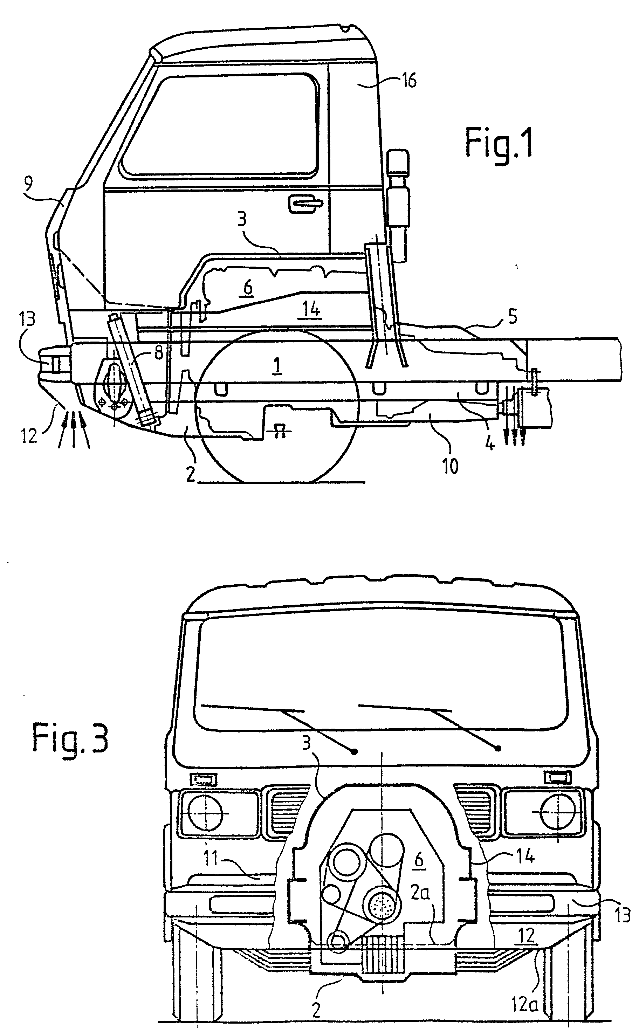

Der in Fig. 1 dargestellte Frontlenkerlastkraftwagen umfasst einen üblichen Leiterrahmen 1, in dem zwischen den beiden Längsträgern ein aus Motor, Kupplung und Getriebe bestehendes Antriebsaggregat 6 aufgehängt ist. Der Motor weist an seinem vorderen Ende einen Lüfter 7 auf und diesem vorangestellt befindet sich ein Kühler 8 im Fahrzeug. Auf dem Fahrzeugrahmen 1 ist ein Frontlenkerfahrerhaus 16 mit einer Fahrerhausfrontwand 9 gelagert. Das Antriebsaggregat 6 mit Lüfter 7 und Kühler 8 ist von einer schalldämmenden Kapsel umgeben, deren Oberseite im wesentlichen von einem Fahrerhausbodenabschnitt 3, deren Unterseite im wesentlichen von am Fahrzeugrahmen 1 befestigten Abdeckschalen 2, 10 gebildet wird. Die schalldämmende Kapsel umfasst ausserdem eine Abdeckung 5 über dem Getriebe, die bis zum Getriebeabtriebsflansch reicht. Als Seitenwände der schalldämmenden Kapsel fungieren die Längsträger des Leiterrahmens 1, die nach oben von zusätzlichen Seitenteilen 14 zwischen Fahrerhaus und Rahmenlängsträgern ergänzt werden und nach unten durch Zwischenteile 4, die den Übergang zu den wannenförmigen Abdeckschalen 2, 10 schaffen. Insgesamt ist die schalldämmende Kapsel als geschlossenes Gehäuse ausgebildet, welches nur eine frontseitige Kühllufteintrittsöffnung etwa vom Querschnitt des Kühlers 8 aufweist und eine heckseitige Kühlluftaustrittsöffnung zwischen der Abdeckung 5 über dem Getriebe und der hinteren Abdeckschale 10.

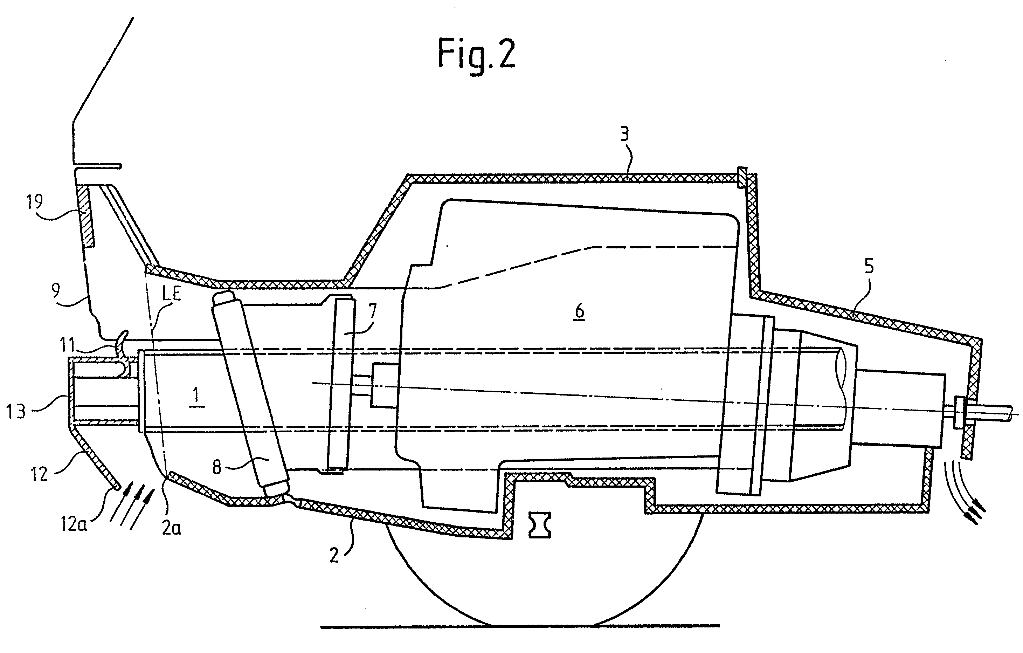

Im vergrösserten Längsschnitt gemäss Fig. 2 ist die Kontur der schalldämmenden Kapsel, in der sich das Antriebsaggregat 6 mit Lüfter 7 und Kühler 8 befinden, durch Kreuzschraffur hervorgehoben, was gleichzeitig ein Hinweis darauf ist, dass die Begrenzungen vorzugsweise aus schalldämmendem Material bestehen oder mit solchem Material beschichtet sind. Gleiche Bauteile sind mit gleichen Bezugszeichen wie in Fig. 1 gekennzeichnet. Die Lufteintrittsöffnung in die Kapsel ist als strichpunktierte Linie LE eingezeichnet. Aus dem Längsschnitt ergibt sich, dass diese Kühllufteintrittsöffnung LE mit Abstand hinter der Frontwand 9 des Fahrerhauses 16 liegt. Die Frontwand 9 bildet zusammen mit einem an ihrem unteren Ende angeordneten vorderen Stossfänger 13 und einer sich an diesen nach unten anschliessenden Schürze 12 eine lückenlose frontale Abdeckung der Projektion der Kühllufteintrittsöffnung LE in Fahrzeuglängsrichtung. Dabei ist der Bewegungsspalt zwischen der Unterkante der Fahrerhausfrontwand 9 und dem Stossfänger 13 durch eine elastische Abdeckleiste 11 überbrückt. Ein üblicherweise in der Fahrerhausfrontwand vorgesehener Kühlergrill ist mit einer aus schallisolierendem Material bestehenden Abdeckung 19 verschlossen. Der Zutritt der Kühlluft zur Kühllufteintrittsöffnung LE der Kapsel erfolgt durch einen etwa horizontal liegenden freien Querschnitt zwischen der Unterkante 12a der Schürze 12 und der Vorderkante 2a einer vorderen Abdeckschale 2.

In der Frontalansicht gemäss Fig. 3 ist die Vorderkante 2a der vorderen Abdeckschale 2 als strichlierte Linie eingezeichnet, die Unterkante 12a der Schürze 12 als durchgehende Linie und es ist aus der Lage dieser beiden Kanten ersichtlich, dass die Projektion der Kühllufteintrittsöffnung LE in Fahrzeuglängsrichtung durch den Verband aus Fahrerhausfrontwand 9, Stossfänger 13 und Schürze 12 vollständig abgedeckt ist.

**Patentansprüche**

1. Nutzfahrzeug mit einem im wesentlichen innerhalb eines Fahrerhauses (16) angeordnetem Antriebsaggregat (6) mit Lüfter (7) und Kühler (8), das von einer schalldämmenden Kapsel umgeben ist, die bis auf eine frontseitige Kühlluftaustrittsöffnung (LE), die im Abstand hinter der tragenden Fahrerhausfrontwand (9) liegt, und eine heckseitige Kühlluftaustrittsöffnung als geschlossenes Gehäuse ausgebildet ist, dessen Oberseite im wesentlichen von einem Fahrerhausbodenabschnitt (3) und dessen Unterseite im wesentlichen von am Rahmen befestigten Abdeckschalen (2, 10) gebildet wird, wobei am unteren Ende der Fahrerhausfrontwand (9) die vorderen Stossfänger (13) und eine sich nach unten anschliessende Schürze (12) angeordnet sind und für den Zutritt der Kühlluft zur Kühllufteintrittsöffnung (LE) der Kapsel ein etwa horizontal liegender freier Querschnitt zwischen Schürzenunterkante (12a) und einer Kante der Abdeckschale (2) vorgesehen ist, dadurch gekennzeichnet, dass

– die Kühllufteintrittsöffnung (LE) der Kapsel sich nach unten unter die Unterkante der Fahrerhausfrontwand (9) erstreckt,

– die Fahrerhausfrontwand (9) geschlossen ist

– und zusammen mit dem vorderen Stossfänger (13) und der Schürze (12) eine lückenlose frontale Abdeckung der Projektion der Kühllufteintrittsöffnung (LE) in Fahrzeuglängsrichtung bildet.

2. Nutzfahrzeug nach Anspruch 1, dadurch gekennzeichnet, dass der Bewegungsspalt zwischen der Unterkante der Fahrerhausfrontwand (9) und dem Stossfänger (13) durch eine elastische Abdeckleiste (11) überbrückt ist.

3. Nutzfahrzeug nach Anspruch 1 oder Anspruch 2, dadurch gekennzeichnet, dass ein in der Fahrerhausfrontwand (9) vorhandener Kühlergrill mit einer aus schallisolierendem Material bestehenden Abdeckung (19) verschlossen ist.

4. Nutzfahrzeug nach den Ansprüchen 1 bis 3, dadurch gekennzeichnet, dass es ein Frontlenkerfahrerhaus (16) aufweist und das Antriebsaggregat (6) im Fahrzeugrahmen (1) in Untersitzbauweise angeordnet ist.

**Claims**

1. A commercial vehicle having a power unit (6) disposed substantially in a driving cab (16) and having a fan (7) and radiator (8) and surrounded by a sound-damping enclosure in the form of a casing enclosed except for a front cooling air exit opening (LE) disposed at a distance behind the bearing cab front wall (9) and for a rear cooling air exit opening, the top of the casing being embodied mainly by a part (3) of the cab floor while the bottom of the casing is embodied substantially by cover shells (2, 10) secured to the chassis, the front bumpers (13) and an apron (12) extending downwardly therefrom being disposed at the bottom end of the cab front wall (9), a substantially horizontal clear cross-section being left between the apron bottom edge (12a) and an edge of the cover shell (2) for cooling air access to the cooling air entry opening (LE), characterised in that:

the cooling air entry opening (LE) of the enclosure extends downwardly below the bottom edge of the cab front wall (9);

the cab front wall (9) is enclosed, and

the cab front wall (9) co-operates with the front bumper (13) and the apron (12) to form a gapless front cover of the projection of the cooling air entry opening (LE) lengthwise of the vehicle.

2. A commercial vehicle according to claim 1, characterised in that the movement gap between the bottom edge of the cab front wall (9) and the bumper (13) is bridged by a resilient cover strip (11).

3. A commercial vehicle according to claim 1 or 2, characterised in that a radiator grill in the cab front wall (9) is closed by a cover (19) made of a sound-insulating material.

4. A commercial vehicle according to claims 1–3, characterised in that it has a front steering cab (16) and the power unit (6) is disposed below the seating in the chassis (1).

## Revendications

1. Véhicule utilitaire comportant un groupe motopropulseur (6), avec un ventilateur (7) et un radiateur (8), disposé essentiellement à l'intérieur d'une cabine de conduite (16), ce groupe étant entouré par un coffrage insonorisant réalisé sous forme d'une enveloppe fermée à l'exception d'une entrée d'air de refroidissement (LE) côté avant, disposée à distance derrière la paroi avant porteuse (9) de la cabine de conduite, et d'une sortie d'air de refroidissement côté arrière, la partie supérieure de cette enveloppe étant essentiellement formée par une partie (3) du plancher de la cabine de conduite et sa partie inférieure étant essentiellement formée par des plaques de recouvrement (2, 10) fixées sur le châssis, le pare-chocs avant (13) et un tablier (12) qui s'y raccorde vers le bas étant disposés à l'extrémité inférieure de la paroi avant (9) de la cabine de conduite, une section libre sensiblement horizontale étant, pour l'arrivée de l'air de refroidissement à l'entrée d'air de refroidissement (LE) prévue entre le bord inférieur (12a) du tablier et un bord de la plaque de recouvrement (2), caractérisé en ce que:
– l'entrée d'air de refroidissement (LE) du coffrage s'étend vers le bas au-dessous du bord inférieur de la paroi avant (9) de la cabine de conduite,
– la paroi avant (9) de la cabine de conduite est fermée,
– et forme, conjointement avec le pare-chocs avant (13) et le tablier (12) un recouvrement frontal sans interruption de la projection de l'entrée d'air de refroidissement (LE) dans la direction longitudinale du véhicule.

2. Véhicule utilitaire selon la revendication 1, caractérisé en ce que l'intervalle de déplacement entre le bord inférieur de la paroi avant (9) de la cabine de conduite et le pare-chocs (13) est ponté par un couvre-joint (11).

3. Véhicule utilitaire selon la revendication 1 ou 2, caractérisé en ce qu'une grille de radiateur existant dans la paroi avant (9) de la cabine de conduite est fermée par une plaque de recouvrement (19) constituée en matière insonorisante.

4. Véhicule utilitaire selon les revendications 1 à 3, caractérisé en ce qu'il comporte une cabine avancée (16) et un groupe motopropulseur (6) disposé dans le châssis (1) du véhicule en étant monté sous les sièges.

0 092 139

Fig.1

Fig.3

Fig.2